# EUROPEAN PATENT SPECIFICATION

(11) **EP 1 044 348 B1**
(45) Date of publication and mention of the grant of the patent: **05.03.2003**
(21) Application number: 98965238.3
(22) Date of filing: 08.12.1998
(51) Int. Cl.: F24H 9/20

(54) **SAFETY DEVICE FOR DETECTING A FLOW OF FUMES INSIDE AN EXHAUST PIPE**
SICHERHEITSVORRICHTUNG ZUR ERKENNUNG VON RAUCHGASSTRÖMUNG IN EINER ABGASLEITUNG
DISPOSITIF DE SECURITE SERVANT A DETECTER UN ECOULEMENT DE FUMEE A L'INTERIEUR D'UN CONDUIT D'ECHAPPEMENT

(30) Priority: 29.12.1997 IT MO970241
(43) Date of publication of application: 18.10.2000
(73) Proprietor: MERLONI TERMOSANITARI S.p.A., 60044 Fabriano (Ancona) (IT)
(72) Inventor: MARCHETTI, Ruggero, I-60044 Fabriano (IT)
(74) Representative: Guareschi, Antonella
(86) International application number: EP9807980
(87) International publication number: WO99034154

(56) References cited:
- GB-A- 1 521 380
- GB-A- 2 205 167
- US-A- 5 419 189

## Description

The present invention relates to a safety device for detecting a flow of fumes inside an exhaust pipe of a gas apparatus for producing sanitary hot water and/or for room heating.

In gas apparatus for producing sanitary hot water and/or for room heating, especially for domestic use, it is of primary importance to envisage safety systems that interrupt the gas inflow if the water heater fails to function normally. Safety devices which detect the flow of fumes in the exhaust pipe and interrupt the gas inflow whenever said flow is lower than a predetermined value are known. According to some systems of a known type, a wide opening has to be made on the fumes exhaust pipe which allows for the passage of levers or other mechanisms operating a traditional switch, owing to the high temperatures reached by the exhaust fumes in the pipe, must be placed out of said pipe.

The document GB-A-1521 380 shows a safety system for gas-fuelled heating apparatus in which only a vane, connected to an extremity of a pivoting lever is positioned into an exhaust pipe for detecting a flow of fumes of a burner; the said pivoting lever can oscillate around a fulcrum positioned externally to the said exhaust pipe; a device is also positioned externally to the said exhaust pipe capable of producing a signal of removing of a distributing gas valve when the pressure inside the exhaust pipe is lower than a predetermined value.

Other systems of a known type are based on the use of differential pressures switches and are, therefore, very complex and expensive, both because of the cost of the component itself and of the costs related to the sample taking of the necessary pressure signals.

The aim of the present invention is to overcome the drawbacks of the prior art technique, providing, in particular, a safety device small enough to be fitted easily and completely inside an exhaust pipe and which can ensure its safe and reliable operation for a long time despite the aggressive action of the water heater exhaust fumes. This aim is achieved by a safety device for detecting a flow of fluid in a duct, particularly a detector of flow of combustion gases in an exhaust pipe of a gas water heater, having a main body comprising a mobile element which can oscillate with respect to the main body between at least two positions corresponding respectively to a flow of fluid higher and lower than a predetermined threshold value, and a position transducer detecting at least said two positions thus generating a signal representative of said two positions, wherein said main body comprises a fixed valve structure which protrudes, inside the duct of the fluid, with a leading edge and a trailing edge, and said mobile element including a mobile valve structure articulated at the trailing edge by means of an axis engaged in proximity of the leading edge of the fixed valve structure in a position basically perpendicular to the outflow of the fluid passing through the duct so that the mobile valve structure and the fixed valve structure form therewith, in a closed configuration, an aerodynamic structure.

In a preferred embodiment, when the device is reached by the water heater exhaust fumes, the mobile element closes on the support body so as to form therewith a casing for the transducer, thus preserving it from the aggressive action of the exhaust fumes.

According to a further embodiment of the present invention, a Hall-effect transducer is mounted on the support body, which is preferably but not exclusively temperature compensated and which can detect the possible proximity of a magnetic plate mounted on the mobile element.

Another embodiment of the present invention comprises an elastic element, preferably a helical flexure spring or a so-called needle spring (also named torsion spring) which makes the mobile element rotate in order to move it away from the support body if the exhaust flow of fumes is insufficient or absent.

Further advantages of the present invention will better emerge from detailed description of a preferred embodiment that follows, with particular reference to the figures of the accompanying drawings, in which:
- figure 1 is a perspective view of a safety device according to the present invention in an alarm open configuration,
- figure 2 is a cross section of the safety device according to line II-II of figure 1, and
- figure 3 is a cross section similar to that in figure 2, wherein the safety device is in a regular operating closed configuration.

With reference to the drawings, a safety device for detecting a flow of fumes inside an exhaust pipe of a gas water heater, globally indicated by reference number 1, comprises a hollow drum 2 fitted in one of its lower parts 2a with an annular flange 3 for mounting the device into the exhaust pipe. On the side opposite to flange 3, the drum 2 is closed by a bottom wall 4 from which a fixed valve 5 protrudes with a leading edge 15 and a trailing edge 16.

A hollow case 6 is disposed on the concave internal wall 5a of the fixed valve 5 communicating with the internal cavity of the drum 2 and accessible by the rear side 2a of the drum 2. In the hollow case 6 a platelet 7 is to be found to which a Hall-effect transducer 8 of a generally known type is fixed that is preferably but not exclusively temperature compensated. The compensation circuit and the circuit and the circuit processing the possible signal of the transducer 8 is fitted correctly inside the drum 2 in such a way the only electrical signal conductors (not illustrated in the figures) come out of said drum 2.

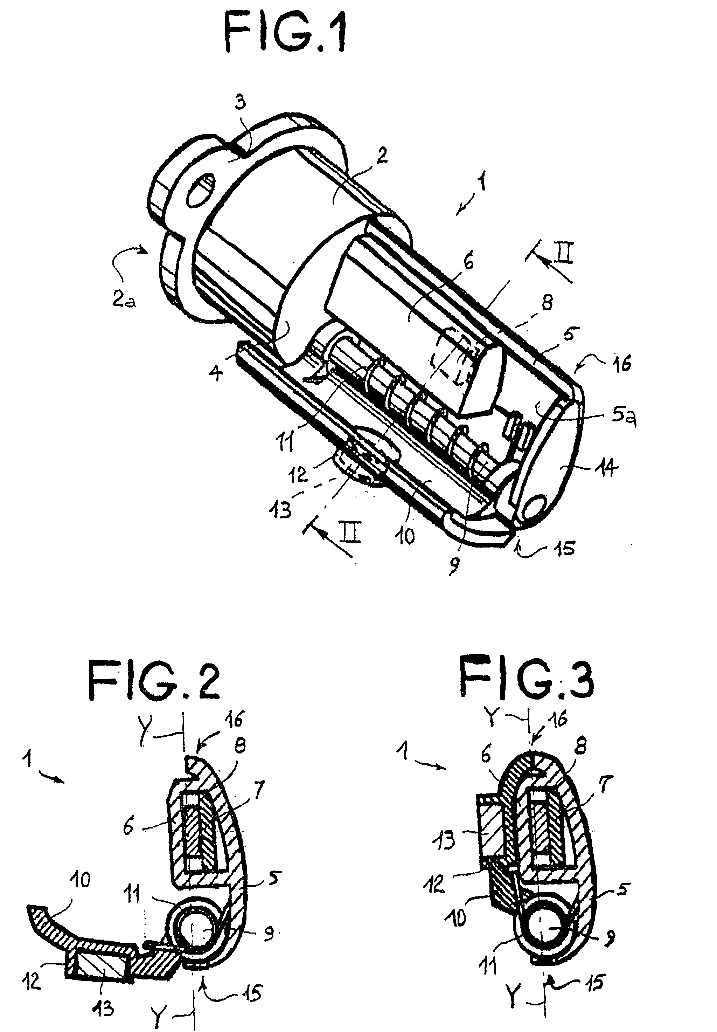

A shaft 9 is aligned with and along the leading edge 15 of the fixed valve 5, and a mobile element 10 is hinged onto said shaft which is basically complementary with the fixed valve 5 and which, in its closed position illustrated in figure 3, forms with said fixed valve 5 an aerodynamic structure which is basically symmetric with respect to the layout plane Y-Y of figures 2 and 3.

A helical flexure spring 11 is positioned on the shaft 9 and pushes the mobile element 10 towards the opening position illustrated in figures 1 and 2. A seat 12 for a magnetic element 13 is constructed on the mobile element 10, in a longitudinal position corresponding with the position of the transducer 8, said magnetic element 13 being fixed by joining, by gluing or by any other known means. A cap 14 coupled onto the end of the shaft 11 prevents the mobile element 10 from being extracted and closes, on the front side, the aerodynamic structure formed by the fixed valve 5 and the mobile element 10 in the closing position of figure 3.

By means of the flange 3, the safety device 1 is mounted onto the inside wall of a fumes exhaust pipe of a gas water heater. On said internal wall of the pipe, within the covered area of the drum 2, a small hole has been made to enable the passage of the electrical signal conductors connected to the transducer 8. For increased safety, it is possible to position a gasket between the pipe wall and the flange 3 , so as to prevent the exhaust fumes from passing through the drum 2 and from coming out of the exhaust pipe through the small passage hole for the electrical conductors. The safety device 1 is mounted with the symmetry plane Y-Y basically parallel to the exhaust flow of fumes and oriented in such a way that the leading edge 15 is reached by the fumes first.

When used in normal operating conditions, if the exhaust flow of fumes in higher than a predetermined value deemed sufficient in the design phase, the fumes press onto the external wall of the mobile element 10 against the spring 11 so as to bring the device to the closed configuration illustrated in figure 3. In this position, the Hall effect transducer 8 is reached by the magnetic field generated by the capsule 13, thus generating an electrical field of a predetermined value which represents a normal operating condition.

If, for any reason, the flow of fumes falls below a threshold value or becomes null, the spring 11 opens the mobile element 10 pushing it towards the position illustrated in figure 2, thus pushing the magnetic element 13 away from the transducer 8 which generates, therefore, a signal of a different value which represents an alarm condition.

The signals generated by the transducer 8 are processed by a circuit of a generally known type positioned inside the drum 2 and/or outside the exhaust pipe which - when an alarm signal is given - activates alarm and safety means, for example interrupting the gas outflow and/or activating acoustic, visual and similar signals.

As an alternative to the Hall-effect transducer 8 mentioned above in the description of a preferred embodiment of the present invention, the device 1 can be fitted with position transducers of a different type, for example resistive, capacitive, inductive or electromagnetic types. In an alternative example of a preferred embodiment, the mobile element 10 can be fixed to the rotating cursor of a potentiometer connected to the fixed valve 5 or to the drum 2.

An important advantage of the present invention is the small number of components that form the safety device. In systems where the Y-Y plane is positioned vertically with the leading edge 15 oriented downwards, it is also possible to avoid the elastic action of the spring 11, as the weight of the mobile valve and of the magnetic element 13 is enough to make the device open if the exhaust flow of fumes is insufficient.

A very important advantage of the preferred embodiment of the present invention, illustrated in the drawings, is that the sensitive part of the Hall-effect transducer 8 and all the electrical connections, as well as the possible control circuit housed in the drum 2, are never in direct contact with the exhaust fumes which, otherwise, could also attack said components from a chemical point of view.

## Claims

1. A safety device for detecting a flow of fluid in a duct, particularly a detector of flow of combustion gases in an exhaust pipe of a gas water heater, having a main body (2, 5) comprising a mobile element (10) which can oscillate with respect to the main body (2, 5) between at least two positions corresponding respectively to a flow of fluid higher and lower than a predetermined threshold value, and a position transducer (8, 13) detecting at least said two positions thus generating a signal representative of said two positions, wherein said main body (2, 5) comprises a fixed valve structure (5) which protrudes, inside the duct of the fluid, with a leading edge (15) and a trailing edge (16), and said mobile element (10) including a mobile valve structure articulated at the trailing edge (16) by means of an axis (9) engaged in proximity of the leading edge (15) of the fixed valve structure (5) in a position basically perpendicular to the outflow of the fluid passing through the duct so that the mobile valve structure and the fixed valve structure (5) form therewith, in a closed configuration, an aerodynamic structure.

2. A safety device according to claim 1, **characterised in that** the position transducer (8, 13) is mounted inside the duct.

3. A safety device according to claim 2, **characterised in that** almost the sensitive part of the position transducer (8) is lodged onto the internal wall (5a) of the fixed valve (5) in a hollow case (6) communicating only with the outside of the duct.

4. A safety device according. to claim 3, **characterised in that** the communication with the outside of the duct is realised through the internal cavity of a drum (2).

5. A safety device according to any one of claims 1 to 4, **characterised in that** all the devices necessary to process the signals originated by the position transducer (8, 13) are contained inside a drum (2) being part of the main body (2, 5).

6. A safety device according to any one of claims 1 to 5, **characterised in that** if the position transducer (8, 13) is sensible to the temperatures, then it is temperature compensated and the compensation circuits are contained in said drum (2).

7. A safety device according to any one of claims 1 to 6, **characterised in that** the position transducer (8, 13) comprises a Hall-effect sensor (8).

8. A safety device according to claim 7, **characterised in that** the Hall-effect sensor (8) is mounted on the main body (5) in order to detect the proximity of a magnetic element (13) mounted on the mobile element (10).

9. A safety device according to any one of claims 1 to 8, **characterised in that** it comprises elastic means (11) to force at least a part of the mobile element (10) into a position distant from the main body (5) making opposition to the thrust exerted on the mobile element (10) by a flow of fluid lower than the predetermined threshold value.

## Patentansprüche

1. Eine Sicherheitsvorrichtung für die Feststellung eines Flusses einer Flüssigkeit in einer Leitung, insbesondere ein Detektor für den Fluss von Abgasen in der Abgasleitung eines Gaswarmwasserbereiters, mit einem Hauptkörper (2, 5), der ein bewegliches Element (10) aufweist, das mit Bezug auf den Hauptkörper (2, 5) zwischen zumindest zwei Positionen oszillieren kann, die jeweils einem Fluss der Flüssigkeit entsprechen, der höher und niedriger als ein vorherbestimmter Schwellwert ist, sowie einen Positionswandler (8, 13), der zumindest die beiden genannten Positionen feststellt und ein Signal erzeugt, dass die genannten beiden Positionen anzeigt **dadurch gekennzeichnet, dass** der genannte Hauptkörper (2, 5) eine feste Ventileinheit (5) aufweist, die innerhalb der Flüssigkeitsleitung mit einer führenden Kante (15) und einer Hinterkante (16) vorspringt und dass das genannte bewegliche Element (10) eine bewegliche Ventileinheit aufweist, die über eine Achse (9) mit der Hinterkante (16) verbunden ist, welche in der Nähe der führenden Kante (15) der festen Ventileinheit (5) in einer Position befestigt ist, die sich im wesentlichen senkrecht zum Auslauf der Flüssigkeit befindet, die durch die Leitung läuft, so dass die bewegliche Ventileinheit und die feste Ventileinheit (5) damit in geschlossener Konfigurierung eine aerodynamische Einheit bilden.

2. Eine Sicherheitsvorrichtung gemäß Anspruch 1, **dadurch gekennzeichnet, dass** der Positionswandler (8, 13) innerhalb der Leitung montiert ist.

3. Eine Sicherheitsvorrichtung gemäß Anspruch 2, **dadurch gekennzeichnet, dass** sich der empfindliche Teil des Positionswandlers (8) an der Innenwand (5a) der festen Ventileinheit (5) in einem hohlen Gehäuse (6) befindet, dass nur mit der Außenseite der Leitung verbunden ist.

4. Eine Sicherheitsvorrichtung gemäß Anspruch 3, **dadurch gekennzeichnet, dass** die Verbindung mit der Außenseite der Leitung aus dem Hohlraum einer Trommel (2) besteht.

5. Eine Sicherheitsvorrichtung gemäß eines beliebigen der Ansprüche 1 bis 4, **dadurch gekennzeichnet, dass** sämtliche Vorrichtungen, die für die Verarbeitung der Signale, die vom Positionswandler (8, 13) erzeugt werden, im Innern der Trommel (2) enthalten sind, die Teil des Hauptkörpers (2, 5) sind.

6. Eine Sicherheitsvorrichtung gemäß eines beliebigen der Ansprüche 1 bis 5, **dadurch gekennzeichnet, dass**, falls der Positionswandler (8, 13) temperaturempfindlich ist, die Temperatur ausgeglichen wird und die Ausgleichsschaltungen in der genannten Trommel (2) enthalten sind.

7. Eine Sicherheitsvorrichtung gemäß eines beliebigen der Ansprüche 1 bis 6, **dadurch gekennzeichnet, dass** der Positionswandler (8, 13) einen Halleffektsensor (8) umfasst.

8. Eine Sicherheitsvorrichtung gemäß Anspruch 7, **dadurch gekennzeichnet, dass** der Halleffektsensor (8) auf dem Hauptkörper (5) montiert ist, so dass er die Nähe eines magnetischen Elements (13) feststellen kann, das auf dem beweglichen Element (10) montiert ist.

9. Eine Sicherheitsvorrichtung gemäß eines beliebigen der Anspräche 1 bis 8, **dadurch gekennzeichnet**, das sie elastische Vorrichtungen (11) aufweist, die zumindest einen Teil des beweglichen Elements (10) in eine vom Hauptkörper (5) entfernte Position zwingt und dem Druck entgegenwirkt, der durch einen Fluss der Flüssigkeit, der niedriger als der vorherbestimmte Schwellwert ist, auf das bewegliche Element (10) ausgeübt wird.

## Revendications

1. Un dispositif de sécurité conçu pour détecter le flux d'un fluide dans un conduit, en particulier un détecteur du flux du gaz de combustion dans le tuyau d'échappement d'un chauffe-eau à gaz, ayant un corps principal (2, 5) comprenant un élément mobile (10) qui peut osciller par rapport au corps principal (2, 5) entre au moins deux positions correspondant respectivement à un flux du fluide supérieur et à un flux inférieur à une certaine valeur de seuil prédéterminé, et un transducteur de position (8, 13) détectant au moins lesdites deux positions, générant ainsi un signal symbolisant lesdites deux positions, **caractérisé par le fait que** ledit corps principal (2, 5) comprend la structure d'une soupape fixe (5) qui fait saillie, à l'intérieur du conduit du fluide, avec une extrémité antérieure (15) et une extrémité postérieure (16), et que ledit élément mobile (10) comprend la structure d'une soupape mobile articulée sur l'extrémité postérieure (16) au moyen d'un axe (9) engagé à proximité de l'extrémité antérieure (15) de la structure de la soupape fixe (5) en une position fondamentalement perpendiculaire par rapport à l'écoulement du fluide passant à travers le conduit de façon telle que la structure de la soupape mobile et la structure de la soupape fixe (5) forment avec celui-ci, en une configuration fermée, une structure aérodynamique.

2. Un dispositif de sécurité comme celui de la revendication 1, **caractérisé par le fait que** le transducteur de position (8, 13) est monté à l'intérieur du conduit.

3. Un dispositif de sécurité comme celui de la revendication 2, **caractérisé par le fait qu'**au moins la partie sensible du transducteur de position (8) est logée sur la paroi intérieure (5a) de la soupape fixe (5) dans un logement creux (6) communiquant seulement avec l'extérieur du conduit.

4. Un dispositif de sécurité comme celui de la revendication 3, **caractérisé par le fait que** la communication avec l'extérieur du conduit est réalisée à travers la cavité interne d'un tambour (2).

5. Un dispositif de sécurité comme celui de n'importe quelle revendication de 1 à 4, **caractérisé par le fait que** tous les dispositifs nécessaires pour traiter les signaux provenant du transducteur de position (8, 13) se trouvent à l'intérieur d'un tambour (2) faisant partie du corps principal (2, 5).

6. Un dispositif de sécurité comme celui de n'importe quelle revendication de 1 à 5, **caractérisé par le fait que** le transducteur de position (8, 13) est sensible à la température, et que, par conséquent, il est compensé quant à la température et les circuits de compensation se trouvent dans ledit tambour (2).

7. Un dispositif de sécurité comme celui de n'importe quelle revendication de 1 à 6, **caractérisé par le fait que** le transducteur de position (8, 13) comprend un capteur effet « hall » (8).

8. Un dispositif de sécurité comme celui de la revendication 7, **caractérisé par le fait que** le capteur effet « hall » (8) est monté sur le corps principal (5) afin qu'il puisse détecter la proximité d'un élément magnétique (13) monté sur l'élément mobile (10).

9. Un dispositif de sécurité comme celui de n'importe quelle revendication de 1 à 8, **caractérisé par le fait qu'**il comprend des moyens élastiques (11) destinés à forcer au moins une partie de l'élément mobile (10) dans une position distante du corps principal (5) en faisant opposition à la poussée exercée sur l'élément mobile (10) par un flux de fluide inférieur à la valeur du seuil prédéterminé.
